# EUROPÄISCHE PATENTSCHRIFT

(11) **EP 3 064 417 B1**
(45) Veröffentlichungstag und Bekanntmachung des Hinweises auf die Patenterteilung: **26.07.2017**
(21) Anmeldenummer: 15003256.3
(22) Anmeldetag: 16.11.2015
(51) Int. Cl.: B62D 65/02, B62D 65/18

(54) **TRANSPORTVORRICHTUNG ZUM BEWEGEN VON WERKSTÜCKEN FÜR DEN KAROSSERIEBAU DER KFZ-INDUSTRIE**
TRANSPORT DEVICE FOR MOVING WORK PIECES FOR CAR BODYWORK CONSTRUCTION IN THE MOTOR VEHICLE INDUSTRY
DISPOSITIF DE TRANSPORT DESTINE A DEPLACER DES PIECES DE COMPOSANT DE CARROSSERIE DE L'INDUSTRIE AUTOMOBILE

(30) Priorität: 03.03.2015 DE 102015002928
(43) Veröffentlichungstag der Anmeldung: 07.09.2016
(73) Patentinhaber: Expert-Tünkers GmbH, 64653 Lorsch (DE)
(72) Erfinder: Tünkers, André, D-40489 Düsseldorf (DE)
(74) Vertreter: Beyer, Rudi

(56) Entgegenhaltungen:
- DE-U1-202004 017 881
- DE-U1-202006 009 312
- US-A1- 2004 144 191
- US-A1- 2013 206 514

## Beschreibung

### Gattung

Die Erfindung betrifft eine Transportvorrichtung zum Bewegen von Werkstücken für den Karosseriebau der Kfz-Industrie entlang einer zumindest abschnittsweise geradlinigen Wegstrecke auf einer starren Förderbahn, an welcher in vorbestimmten Abständen mit ihren Drehachsen parallel zueinander verlaufende Rollenbolzen, die mit der Förderbahn unbeweglich verbunden sind, drehbar angeordnet sind, mit einem Transportschlitten oder mehreren Transportschlitten und einer oder mehreren dem jeweiligen Transportschlitten zugeordneten Nutwalzen, die an ihrem Umfang wenigstens eine gewendelte Nut aufweisen, in die ein Rollenbolzen oder mehrere Rollenbolzen formschlüssig drehbar eingreifen, mit einem motorischen Antrieb für die betreffende Nutwalze, der dem Transportschlitten zugeordnet und mit diesem beweglich angeordnet ist, wobei der Steigungswinkel der Nut über die Axiallänge der Nutwalze gleichbleibend oder der Steigungswinkel der Nut über ihre Länge unterschiedlich ist, wobei der Steigungswinkel der Nut die unterschiedlichen Geschwindigkeiten und Beschleunigungen bzw. Verzögerungen für den betreffenden Transportschlitten bestimmt.

### Stand der Technik

Eine derartige Transportvorrichtung ist aus der US 2004/0144191 A1 vorbekannt.

Eine weitere vorbekannte Bauart bedient sich zum Antrieb eines Transportschlittens eines motorischen angetriebenen Ritzels, das mit einer sich in Förderrichtung erstreckenden Zahnstange kämmt. Die Zahnstange muss geschmiert und die getriebliche Verbindung zwischen Ritzel und Zahnstange gegen Verschmutzung der getrieblichen Verbindung selbst, aber auch der Umwelt durch faltenbalgartige Abdeckungen geschützt werden. Außerdem kommt es zu Geräuschentwicklung und einer nicht vollkommen ruckfreien Bewegung.

Die US 2013/0206514 A1 zeigt einen Lift, dessen Fahrstuhl durch vertikal angeordnete Hauptgetriebe hinauf und herunter bewegt wird. An der Seite eines Gerüstes sind im Abstand zueinander an einer Schiene Rollenbolzen angeordnet, die mit ihrer Längsachse vertikal angeordnete motorisch angetriebene Nutwalzen kämmen.

Die JP 2006077842 A zeigt einen Antriebsmechanismus mit einer Nutwalze, deren Achse unter einem spitzen Winkel zu einem starren Element verläuft, an dem im Abstand zueinander angeordnete Rollenbolzen angeordnet sind, mit denen die Nutwalze kämmt.

Aus der DE 20 2006 009 312 U1 ist eine Bearbeitungsstation als Fügestation für Werkstücke, insbesondere Fahrzeugkarosserien, vorbekannt, wobei die Bearbeitungsstation ein Gestell mit mindestens einer Arbeitsstelle, mehreren Spannrahmen, mindestens einem Rahmenmagazin, einer Rahmenwechseleinrichtung und einer Bearbeitungseinrichtung für die Werkstücke aufweist. Die Rahmenwechseleinrichtung besitzt ein oder mehrere mehrachsige Manipulatoren, wobei die Spannrahmen eine Dockingeinrichtung zur lösbaren Verbindung mit dem Manipulator besitzen und wobei eine Positioniereinrichtung zur Positionierung und Fixierung der Spannrahmen am Gestell vorgesehen ist. Der Manipulator ist als Gelenkarmroboter ausgebildet und bildet eine zusätzliche Bewegungsachse, insbesondere eine Fahrachse, für den Transport zwischen der Arbeitsstelle und dem Rahmenmagazin. Die Bewegungsachse ist zwischen der Bearbeitungseinrichtung und der Arbeitsstelle angeordnet. Bei der Rahmenwechseleinrichtung sind die Gelenkarmroboter sechsachsig ausgebildet oder stellen sogenannte Handlingroboter dar mit einer mehrachsigen Roboterhand mit einer geeigneten Wechselkupplung. Die den Manipulatoren zugewiesene zusätzliche Bewegungsachse kann zum Beispiel eine gerade oder gebogene Fahrachse oder siebte Achse der Roboter sein, die gegebenenfalls parallel zur Transferlinie ausgerichtet ist und auf eine oder beiden Seiten der Transferlinie angeordnet ist. Auf der zusätzlichen Bewegungsachse können sich die Manipulatoren für den Spannrahmentransport zwischen der Arbeitsstelle und dem oder den Rahmenmagazinen hin und her bewegen. Die zusätzliche Bewegungsachse kann alternativ durch einen Förderer oder eine andere Transporteinrichtung gebildet werden. Sie muss nicht linear verlaufen. Als zusätzliche Achse kann zum Beispiel ein Schwingensystem dienen.

Aus der DE 198 37 212 A1 ist eine Stellvorrichtung mit einem Antrieb und einem Gehäuse vorbekannt, das den Antrieb umgibt, und einen in eine Bewegungseinrichtung beweglichen Schlitten aufweist, der durch den Antrieb bewegbar ist und der einen außerhalb des Gehäuses laufenden Abschnitt aufweist. Das Gehäuse besitzt einen flexiblen Wandbereich, der im Bereich außerhalb des Schlittens ruht und das Gehäuse verschließt, und der im Bereich des Schlittens entsprechend den Bewegungen des Schlittens so bewegbar ist, dass er die mechanische Verbindung zwischen dem außerhalb des Gehäuses laufenden Abschnitt des Schlittens und dem Antrieb ermöglicht.

Die JP 60031427 A zeigt einen Antrieb für Nutwalzen, die Paletten befördern sollen.

Aus der GB 2 492 264 A ist eine Transportvorrichtung zum Transportieren von Karosserieteilen vorbekannt.

Die DE 20 2004 017 881 U1 zeigt eine Handlingvorrichtung zum mehrachsigen Handhaben und Führen von Werkstücken, insbesondere Karosseriebaugruppen, in einer Bearbeitungsstation relativ zu ein oder mehreren Bearbeitungsvorrichtungen. Die Handlingvorrichtung weist mehrere mehrachsig bewegliche Manipulatoren auf, die gemeinsam und in aufeinander abgestimmten Bewegungen eine Trageinrichtung mit dem darauf angeordneten Werkstück handhaben und führen. Die Manipulatoren sind als mehrachsige Gelenkarmroboter ausgebildet. Mit einer solchermaßen gestalteten Handlingvorrichtung sollen sich große und schwergewichtige Werkstücke, insbesondere Karosseriebaugruppen, mittels einer Tragvorrichtung handhaben lassen und während des Bearbeitungsprozesses relativ zu ein oder mehreren Bearbeitungsvorrichtungen auch bewegbar sein. Dadurch könne man das Werkstück in verschiedene prozessgünstige Lagen und Orientierungen bringen und auch beim Schmelzschweißen, zum Beispiel beim Schutzgasschweißen, derart halten und führen, dass sich an der Schweißstelle eine sogenannte Wannenlage bildet, die ein Abfließen der Schmelze verhindere. Ähnliche Vorteile ergäben sich auch bei anderen Bearbeitungsprozessen, zum Beispiel dem Kleben oder Abdichten. Das Werkstück könne im Übrigen auch auf den Kopf gestellt werden, wodurch seine Unterseite eine prozessgünstige Lage erhalte.

### Aufgabe

Der Erfindung liegt die Aufgabe zugrunde, eine Transportvorrichtung zu schaffen, welche die Einsatzmöglichkeiten von mehrachsigen Robotern vergrößert und präzise Arbeiten an Bearbeitungsstationen gestattet.

### Lösung

Die Aufgabe wird gelöst durch eine Transportvorrichtung zum Bewegen von Werkstücken für den Karosseriebau der Kfz-Industrie entlang einer zumindest abschnittsweise geradlinigen Wegstrecke auf einer starren Förderbahn, an welcher in vorbestimmten Abständen mit ihren Drehachsen parallel zueinander verlaufende Rollenbolzen, die mit der Förderbahn unbeweglich verbunden sind, drehbar angeordnet sind, mit einem Transportschlitten oder mehreren Transportschlitten und einer oder mehreren dem jeweiligen Transportschlitten zugeordneten Nutwalzen, die an ihrem Umfang wenigstens eine gewendelte Nut aufweisen, in die ein Rollenbolzen oder mehrere Rollenbolzen formschlüssig drehbar eingreifen, mit einem motorischen Antrieb für die betreffende Nutwalze, der dem Transportschlitten zugeordnet und mit diesem beweglich angeordnet ist, wobei der Steigungswinkel der Nut über die Axiallänge der Nutwalze gleichbleibend oder der Steigungswinkel der Nut über ihre Länge unterschiedlich ist, wobei der Steigungswinkel der Nut die unterschiedlichen Geschwindigkeiten und Beschleunigungen bzw. Verzögerungen für den betreffenden Transportschlitten bestimmt, und dass dem betreffenden Transportschlitten ein mehrachsiger Roboter zugeordnet ist, der mit dem Transportschlitten fahrbar ist, wobei die Transportvorrichtung eine zusätzliche Bewegungsachse für den mehrachsigen Roboter bildet, wobei die Rollenbolzen in Gruppen von jeweils mehreren Rollenbolzen insgesamt austauschbar an einem Trägerkörper angeordnet sind, und wobei die Abstände der Rollenbolzen und ihrer Längsachsen zueinander so gewählt sind, dass ein Rollenbolzen oder mehrere Rollenbolzen formschlüssig in der gewendelten Nut der betreffenden Nutwalze gleichzeitig eingreifen.

Die Transportvorrichtung mit der ihr zugeordneten Nutwalze schraubt sich somit zusammen mit ihrem Antriebsmotor entlang der starren Förderbahn durch Eingriff der betreffenden Nut in die mit Abstand zueinander angeordneten Rollenbolzen. Diese Rollenbolzen sind in der Regel wälzlagergelagert und greifen hochpräzise in die betreffende Nut der zugeordneten Nutwalze ein, so dass ein ruckfreies und sehr präzises geräuscharmes Fahren der Transportschlitten mit den darauf anzuordnenden Werkstücken gegeben ist. Dadurch eignen sich Transportvorrichtungen der erfindungsgemäßen Art besonders dort, wo Arbeiten durch mehrachsige Roboter in Fertigungsstraßen der Kfz-Industrie vorgenommen werden. Bei diesen müssen die Transportschlitten mit ihren Werkstücken sehr genau in vorbestimmte Positionen gesteuert werden, was mit einer Transportvorrichtung gemäß der Erfindung mit großer Genauigkeit gelingt.

Da jeder Transportschlitten einen eigenen motorischen Antrieb und eine eigene Nutwalze aufweist, kann die Förderbahn an sich beliebig lang sein. Auch ist es möglich, mehrere derartiger Transportvorrichtungen mit mehreren Transportschlitten, diesen zugeordneten Nutwalzen und Antriebsmotoren hintereinander anzuordnen, um Werkstücke auch über größere Entfernungen von zum Beispiel 50 Metern oder sogar vielen hundert Metern ruckfrei und präzise zu transportieren.

Da jedem Schlitten eine motorisch angetriebene Nutwalze zugeordnet ist, können die Nutwalzen relativ kurz gehalten sein, so dass sie einstückig hochpräzise gefertigt werden können.

Besonders vorteilhaft ist es, dass auf einem Transportschlitten einer erfindungsgemäßen Transportvorrichtung auch ein mehrachsiger, zum Beispiel 6-achsiger Roboter selbst angeordnet, zum Beispiel angeschraubt, sein kann. Dadurch erhält der mehrachsige Roboter quasi eine zusätzliche Transportachse durch die Transportvorrichtung selbst, wodurch sein Aktionsradius vergrößert werden kann. Der Roboter kann dann während seines Transports an den unterschiedlichen Bearbeitungsstellen arbeiten, zum Beispiel Schweißarbeiten durchführen, Werkstücke aufnehmen und wieder ablegen oder sonstige Arbeiten durchführen, beispielsweise sogar während der Bewegung von einer zu anderen Bearbeitungsstation präzise Arbeiten durchführen.

Der Steigungswinkel der Nut kann über die Axiallänge gleich bleibend sein. Es ist aber auch möglich, den Steigungswinkel der Nut über ihre Länge unterschiedlich auszugestalten, derart, dass die Steigungswinkel der Nut die unterschiedlichen Geschwindigkeiten und Beschleunigungen bzw. Verzögerungen für den Transportschlitten bestimmen. Die betreffende Nut bildet somit das Bewegungs- oder Beschleunigungsprofil über eine Wegstrecke ab.

Besonders vorteilhaft ist, dass die Transportvorrichtung selbst eine zusätzliche Achse des mehrachsigen Roboters bildet, so dass dessen Aktionsradius erheblich vergrößert wird. Hierzu kann der Roboter auf einem Transportschlitten selbst angeordnet, zum Beispiel angeschraubt, sein.

Mit der erfindungsgemäßen Vorrichtung kann man quasi alle möglichen Werkstücke bewegen, aber auch Vorrichtungen oder dergleichen. Die Verwendung einer derartigen Transportvorrichtung zielt primär auf die siebte Achse. Der Roboter, der in bestimmten Bearbeitungsstationen angeordnet ist, hat in der Regel sechs Achsen. Die siebte Achse wird quasi durch die erfindungsgemäße Transportvorrichtung gebildet. Mit der siebten Achse werden die Roboter mit ihren Werkzeugen (Schweißzangen usw.) zwischen den Bearbeitungsstationen zu den Arbeitspunkten verfahren. Auch werden Roboter benutzt, um Bauteile in einer Station aufzunehmen, über die siebte Achse zur nächsten Station verfahren und dort wieder abzulegen. Hierzu reicht in der Regel der Bewegungsradius des Roboters mit seinen sechs Achsen nicht aus. Durch die sehr präzise Transportmöglichkeit und ruckfreie Bewegung von Werkstücken, Vorrichtungen und dergleichen mittels der erfindungsgemäßen Transportvorrichtung lässt sich somit ein achsgenaues Positionieren ermöglichen.

Dadurch, dass die Rollenbolzen auf dem Unterbau mit ihren Längsachsen parallel zueinander, zum Beispiel zu Gruppen von jeweils mehreren Rollenbolzen, insgesamt austauschbar zusammen angeordnet sind, können mehrere Rollenbolzen zu zweit, zu dritt, zu viert oder dergleichen an einem Tragkörper, zum Beispiel an einer anzuschraubenden Lasche, angeordnet sein.

### Weitere erfinderische Ausgestaltungen

Weitere erfinderische Ausgestaltungen sind in den **Patentansprüchen 2** bis **12** beschrieben.

Bei der Ausführungsform nach **Patentanspruch 2** bildet ein 6-achsiger Roboter durch die Transportvorrichtung eine zusätzliche Bewegungsachse, so dass insgesamt sieben Bewegungsachsen gegeben sind.

Bei der Ausführungsform nach **Patentanspruch 3** ist die Drehrichtung der motorisch angetriebenen Nutwalze reversierbar, so dass der Transportschlitten in entgegengesetzten Richtungen steuerbar ist.

Vorteilhafterweise ist der Antriebsmotor bei der Ausführungsform nach **Patentanspruch 4** für die Nutwalze ein Asynchronmotor oder ein Asynchronservomotor oder ein Synchronservomotor.

Die Transportvorrichtung nach **Patentanspruch 5** ist dadurch gekennzeichnet, dass in Längsachsrichtung der Transportbahn mehrere Nutwalzen angeordnet sind, denen jeweils ein Transportschlitten mit getrenntem motorischem Antrieb zugeordnet ist und die unabhängig voneinander antreibbar sind. Auf diese Weise ist es möglich, über lange Transportwege, Werkstücke, zum Beispiel Karosserieteile oder ganze Karosserien im Kfz-Bau zu transportieren und zum Beispiel mehrachsigen Robotern zuzuführen.

Bei der Transportvorrichtung nach **Patentanspruch 6** beträgt die Länge der Transportvorrichtung 0,5 bis 50 m, kann aber im Bedarfsfalle auch länger bemessen sein.

Vorteilhafterweise ist bei der Transportvorrichtung nach **Patentanspruch 7** die Energieversorgungsleitung (Stromkabel) für den Antriebsmotor der Nutwalze mitschleppbar, dem Transportschlitten, zum Beispiel in Schlaufen, zugeordnet.

Die Transportvorrichtung nach **Patentanspruch 8** ist dadurch gekennzeichnet, dass die Transportvorrichtung und damit die Nutwalze oder die Nutwalzen mit ihrer Längsachse oder mit ihren Längsachsen in horizontaler Länge angeordnet sind.

Bei der Ausführungsform nach **Patentanspruch 9** sind die Nutwalze oder die Nutwalzen mit ihren Längsachsen in einer von der Horizontalen abweichenden Ebene angeordnet. Dagegen ist die Transportvorrichtung oder sind die Transportvorrichtungen nach **Patentanspruch 10** und damit auch die zugeordnete Nutwalze oder die Nutwalzen mit ihrer Längsachse oder ihren Längsachsen in vertikaler Ebene angeordnet.

Gemäß **Patentanspruch 11** ist die Transportvorrichtung bei horizontaler Bewegung des Transportschlittens über Kopf, also hängend an der Decke, angeordnet, während die Transportvorrichtung bei der Ausführungsform nach **Patentanspruch 12** zum Beispiel an einer Wand angeordnet ist.

In der Zeichnung ist die Erfindung - teils schematisch - an einem Ausführungsbeispiel veranschaulicht. Es zeigen:
- Fig. 1: eine Transportvorrichtung mit einem Transportschlitten in perspektivischer Darstellung;
- Fig. 2: die aus Fig. 1 ersichtliche Transportvorrichtung, abgebrochen dargestellt, teils im Längsschnitt, teils in der perspektivischen Ansicht;
- Fig. 3: eine Transportvorrichtung mit zwei Transportschlitten, diesen jeweils zugeordneten getrennten motorischen Antrieben.

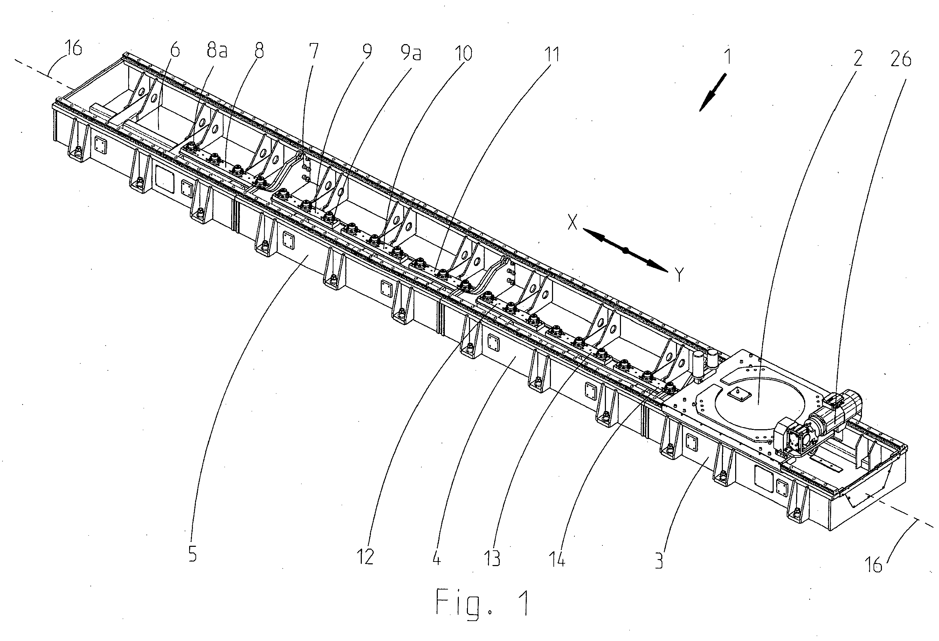

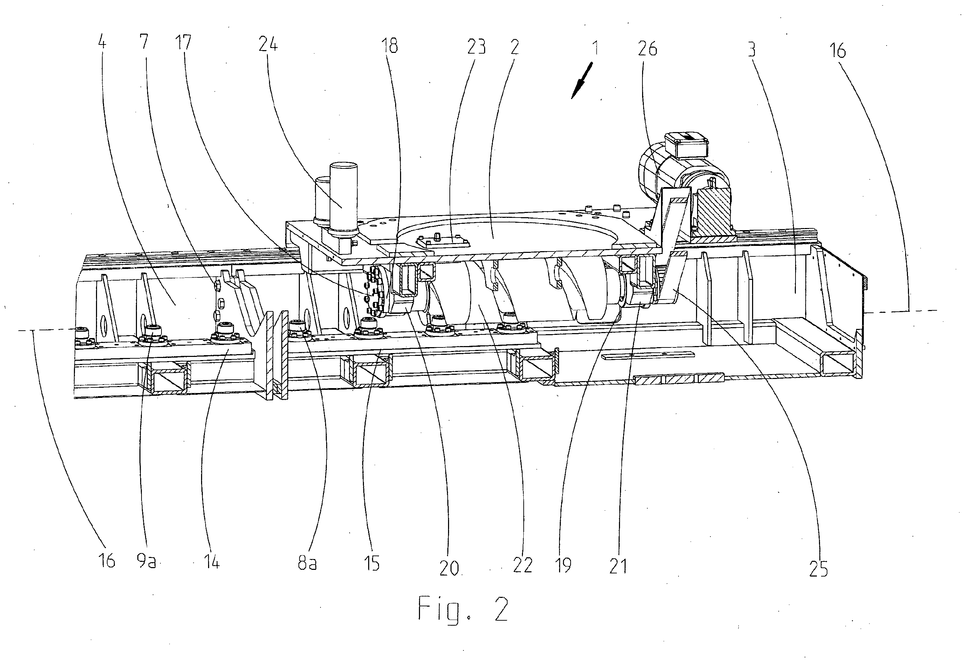

Mit dem Bezugszeichen 1 ist eine Transportvorrichtung bezeichnet, der bei der Ausführungsform nach den Fig. 1 und 2 ein Transportschlitten 2 zum Aufnehmen von Werkstücken, z. B. von Karosserieteilen im Kfz-Bau oder dergleichen, zugeordnet ist (letztere nicht dargestellt).

Auf einem oder allen Schlitten kann jeweils ein mehrachsiger, zum Beispiel 6-achsiger Roboter angeordnet sein, der entlang des Transportweges X bzw. Y Arbeiten, zum Beispiel Schweißarbeiten, durchführt. Hierzu kann der nicht dargestellte Roboter auf seinem Transportweg zu bearbeitende Werkstücke aufnehmen, an ihnen Arbeiten durchführen und die Werkstücke dann wieder ablegen oder sie zum Zwecke des Weitertransports auch auf einem Transportschlitten ablegen oder selbst weiter transportieren.

Die erfindungsgemäße Vorrichtung eröffnet allerdings auch die Möglichkeit, den mehrachsigen Roboter neben der Transportbahn, also nicht auf einem Schlitten, anzuordnen, so dass die Transportschlitten ausschließlich zum Transportieren von Werkstücken verwendet werden können.

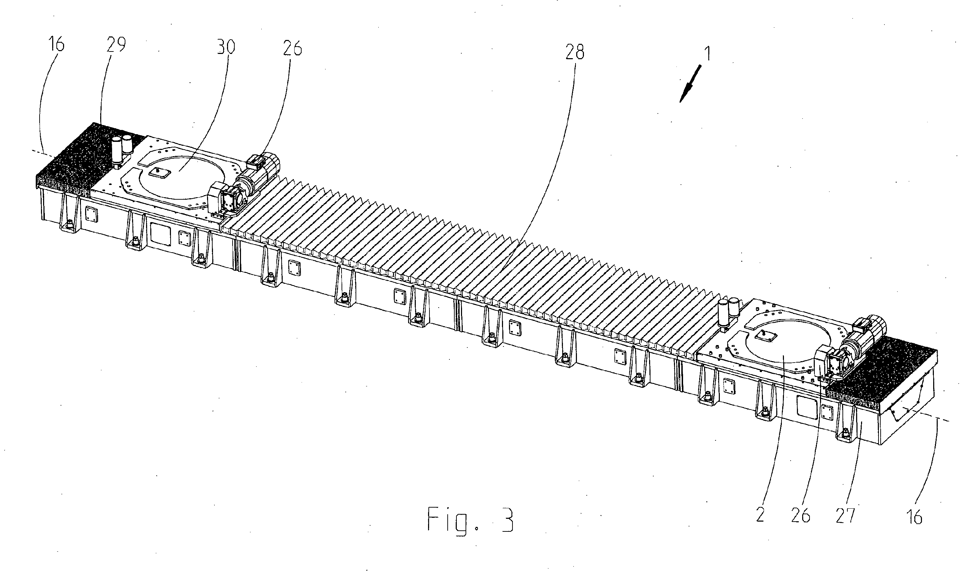

Der Transportschlitten ist über einen zugeordneten und mit dem Transportschlitten in Richtung X bzw. Y beweglichen Getriebemotor 26 in einer noch zu beschreibenden Art und Weise angetrieben. Bei der Ausführungsform nach Fig. 3 ist optional ein weiterer Transportschlitten 30 zugeordnet, dem ebenfalls ein Getriebemotor 26 zugeordnet ist. Der Getriebemotor kann als Asynchronmotor oder als Asynchronservomotor oder als Synchronservomotor ausgebildet sein. Elektrische Kabel, die in Schlaufen mitgeführt werden, sind aus Gründen der Übersichtlichkeit nicht dargestellt.

Der Schlitten ist auf einer starren Förderbahn in Richtung X bzw. Y geführt. Die Förderbahn besteht aus mehreren Gehäuseteilen 3, 4, 5, 6, die aneinandergelascht und durch Schrauben miteinander lösbar und koaxial durch Schrauben 7 lösbar miteinander verbunden sind.

Den Gehäuseteilen 3 bis 6 und damit dem starren Unterbau sind in Längsachsrichtung der Förderbahn Rollenbolzeneinheiten 8 bis 15 koaxial zueinander zugeordnet, wobei zum Beispiel die Rollenbolzeneinheit 8 vier Rollenbolzen und die Rollenbolzeneinheit 9 drei Rollenbolzen aufweist. Die Anzahl der Rollenbolzen kann aber auch unterschiedlich sein. Bei den dargestellten Ausführungsformen verlaufen die Drehachsen der Rollenbolzen parallel zueinander und orthogonal zum Boden der Transportvorrichtung.

Jedem Transportschlitten 2 bzw. 30 ist je eine Nutwalze 22 zugeordnet, deren Längsachse mit dem Bezugszeichen 16 bezeichnet ist und die parallel zur Längsachse in Förderrichtung X bzw. Y verläuft.

Jede Nutwalze 22 ist mit den zugeordneten Transportschlitten 2 oder 30 baueinheitlich verbunden und damit mit dem betreffenden Transportschlitten in Richtung X bzw. Y zusammen mit dem Antriebsmotor 26 in der jeweiligen Transportrichtung verfahrbar. Die Rollenbolzen 8a, 9a der Rollenbolzeneinheiten 8 bis 15 greifen jeweils in die gewendelte Nut der zugeordneten Nutwalze 22 des betreffenden Transportschlittens 2 oder 30 ein. Da die Nutwalze durch den zugeordneten Motor 26 drehangetrieben ist, wird der zugeordneten Transportschlitten 2 oder 30 je nach Antriebsrichtung durch den Getriebemotor 26 in die Transportrichtung X oder Y bewegt. Die betreffende Nutwalze 22 schraubt sich somit entlang der ortsunbeweglich angeordneten Rollenbolzeneinheiten 8 bis 15 entlang. Da sowohl die Rollenbolzen als auch die betreffenden Nuten der Nutwalze 22 präzise gearbeitet sind, sind die Schlitten 2 und 30 äußerst präzise und ruckfrei in der jeweiligen Transportrichtung zu bewegen, um zum Beispiel die auf den Transportschlitten 2 oder 30 angeordneten Werkstücke, wie zum Beispiel Karosserien von Kraftfahrzeugen Roboterarmen zuzuführen. Die Länge der Transportwege spielt praktisch keine Rolle mehr, da die Nutwalzen 22 sich entlang praktisch jeder beliebigen Transportlänge entlangschrauben können. Das kann entweder ein Transportschlitten mit zugeordnetem motorischen Antrieb oder auch mehrere Transportschlitten sein, je nach Anwendungsfall. Die Länge der Nutwalzen kann auch in dem erforderlichen Maße kurz gehalten werden, so dass eine hochpräzise Bearbeitung derartiger Nutwalzen gegeben ist.

Bei 17 ist ein Transportlagerdeckel angeordnet, während 18 und 19 Lagerpatronen darstellen und 20 und 21 Lageraufnahmen sind.

Bei 23 ist eine Schmierkassette vorgesehen, während 24 eine automatische Schmiereinheit darstellt.

Das Bezugszeichen 25 bezeichnet einen Zahnriementrieb, während 27, 28 und 29 optional vorzusehende Faltenbälge darstellen, um die Förderbahn gegen Schmutz und Feuchtigkeit zu schützen.

### Bezugszeichen

- 1: Transportvorrichtung
- 2: Transportschlitten
- 3: Gehäuseteil 1
- 4: Gehäuseteil 2
- 5: Gehäuseteil 3
- 6: Gehäuseteil 4
- 7: Schrauben
- 8: Rollenbolzeneinheit (vierfach) mit Rollenbolzen
- 8a: Rollenbolzen
- 9: Rollenbolzeneinheit (dreifach)
- 9a: Rollenbolzen
- 10: Rollenbolzeneinheit
- 11: "
- 12: "
- 13: "
- 14: "
- 15: "
- 16: Längsachse
- 17: Lagerdeckel
- 18: Lagerpatrone 1
- 19: Lagerpatrone 2
- 20: Lageraufnahme 1
- 21: Lageraufnahme 2
- 22: Nutwalze
- 23: Schmierkassette
- 24: automatische Schmiereinheit
- 25: Zahnriementrieb
- 26: Getriebemotor, Antriebsmotor, Motor
- 27: Faltenbalg
- 28: "
- 29: " (optional)
- 30: Schlitten (optional)

- X: Bewegungsrichtung, Wegstrecke
- Y: " ' "

### Literaturverzeichnis

US 2004/0144191 A1
US 2013/0206514 A1
JP 2006077842 A
DE 20 2006 009 312 U1
DE 198 37 212 A1
JP 60031427 A
GB 2 492 264 A

## Patentansprüche

1. Transportvorrichtung (1) zum Bewegen von Werkstücken für den Karosseriebau der Kfz-Industrie entlang einer zumindest abschnittsweise geradlinigen Wegstrecke (X - Y) auf einer starren Förderbahn, an welcher in vorbestimmten Abständen mit ihren Drehachsen parallel zueinander verlaufende Rollenbolzen (8a, 9a), die mit der Förderbahn unbeweglich verbunden sind, drehbar angeordnet sind, mit einem Transportschlitten oder mehreren Transportschlitten (2, 30) und einer oder mehreren dem jeweiligen Transportschlitten (2, 30) zugeordneten Nutwalzen (22), die an ihrem Umfang wenigstens eine gewendelte Nut aufweisen, in die ein Rollenbolzen oder mehrere Rollenbolzen (8a, 9a) formschlüssig drehbar eingreifen, mit einem motorischen Antrieb (26) für die betreffende Nutwalze (22), der dem Transportschlitten (2, 30) zugeordnet und mit diesem beweglich angeordnet ist, wobei der Steigungswinkel der Nut über die Axiallänge der Nutwalze (22) gleichbleibend oder der Steigungswinkel der Nut über ihre Länge unterschiedlich ist, wobei der Steigungswinkel der Nut die unterschiedlichen Geschwindigkeiten und Beschleunigungen bzw. Verzögerungen für den betreffenden Transportschlitten (2, 30) bestimmt, und dass dem betreffenden Transportschlitten (2) ein mehrachsiger Roboter zugeordnet ist, der mit dem Transportschlitten (2) fahrbar ist, wobei die Transportvorrichtung (2) eine zusätzliche Bewegungsachse für den mehrachsigen Roboter bildet, wobei die Rollenbolzen (8a, 9a) in Gruppen von jeweils mehreren Rollenbolzen insgesamt austauschbar an einem Trägerkörper angeordnet sind, und wobei die Abstände der Rollenbolzen (8a, 9a) und ihrer Längsachsen zueinander so gewählt sind, dass ein Rollenbolzen oder mehrere Rollenbolzen (8a, 9a) formschlüssig in der gewendelten Nut der betreffenden Nutwalze (22) gleichzeitig eingreifen.

2. Transportvorrichtung nach Anspruch 1, **dadurch gekennzeichnet, dass** auf dem Transportschlitten (2) ein 6-achsiger Roboter angeordnet ist und die Transportvorrichtung die siebente Bewegungsachse darstellt.

3. Transportvorrichtung nach Anspruch 1 oder 2, **dadurch gekennzeichnet, dass** die Drehrichtung der betreffenden Nutwalze (22) durch ihren Antriebsmotor (26) reversierbar ist.

4. Transportvorrichtung nach Anspruch 1 oder einem der darauf folgenden Ansprüche, **dadurch gekennzeichnet, dass** der Antriebsmotor (26) für die Nutwalze ein Asynchronmotor oder ein Asynchronservomotor oder ein Synchronservomotor ist, der in seiner Drehzahl steuerbar bzw. regelbar ausgebildet ist.

5. Transportvorrichtung nach Anspruch 1 oder einem der darauf folgenden Ansprüche, **dadurch gekennzeichnet, dass** in Längsachsrichtung der Transportbahn mehrere Nutwalzen (22) angeordnet sind, denen jeweils ein Transportschlitten (2 bzw. 30) mit eigenem motorischen Antrieb (26) zugeordnet ist, die unabhängig voneinander antreibbar sind.

6. Transportvorrichtung nach Anspruch 1 oder einem der darauffolgenden Ansprüche, **dadurch gekennzeichnet, dass** die Länge der Transportvorrichtung 0,5 bis 50 Meter oder mehr beträgt.

7. Transportvorrichtung nach Anspruch 1 oder einem der darauf folgenden Ansprüche, **dadurch gekennzeichnet, dass** die Energieversorgungsleitungen (Stromkabel) für den Antriebsmotor (26) der Nutwalze (22) mitschleppbar dem Transportschlitten (2, 30), zum Beispiel in Schlaufen, zugeordnet sind.

8. Transportvorrichtung nach Anspruch 1 oder einem der darauf folgenden Ansprüche, **dadurch gekennzeichnet, dass** die Nutwalze oder die Nutwalzen (22) mit ihren Längsachsen (16) in horizontaler Ebene angeordnet sind.

9. Transportvorrichtung nach Anspruch 1 oder einem der Ansprüche 2 bis 7, **dadurch gekennzeichnet, dass** die Nutwalze oder die Nutwalzen (22) mit ihren Längsachsen in einer von der Horizontalen abweichenden Ebene angeordnet sind.

10. Transportvorrichtung nach Anspruch 1 oder einem der Ansprüche 2 bis 7, **dadurch gekennzeichnet, dass** die Nutwalze oder die Nutwalzen (22) mit ihren Längsachsen in vertikaler Ebene angeordnet sind.

11. Transportvorrichtung nach Anspruch 1 oder einem der Ansprüche 2 bis 7, **dadurch gekennzeichnet, dass** die Transportvorrichtung (1) über Kopf an einer Decke oder an einem Gerüst bei insbesondere horizontaler Bewegung angeordnet ist.

12. Transportvorrichtung nach Anspruch 1 oder einem der Ansprüche 2 bis 7, **dadurch gekennzeichnet, dass** die Transportvorrichtung (1) an einer senkrechten Wand oder an einem aufrecht stehenden Gerüst angeordnet ist.

## Claims

1. Transport device (1) for transporting workpieces used in vehicle body construction in the automotive industry along an at least partly straight path (X - Y) on a rigid conveyor track on which roller pins (8a, 9a) that are set parallel to one another and are immovably connected to the conveyor track are rotatably arranged with their rotation axes at predetermined intervals, and having one or more transport carriages (2, 30) and one or more grooved rollers (22) that are assigned to each transport carriage (2, 30) and incorporate on their circumference one or more spiral grooves into which one or more roller pins (8a, 9a) positively engages or engage rotatably and having a motor drive (26) for the said grooved roller (22) which motor drive (26) is assigned to and is arranged so as to be able to move with the transport carriage (2, 30), wherein the pitch angle of the groove remains constant along the axial length of the grooved roller (22), or the pitch angle of the groove varies along its length, wherein the pitch angle of the groove determines the different speeds and rates of acceleration or deceleration for the said transport carriage (2, 30), and wherein the said transport carriage (2) is assigned a multi-axis robot that can be carried with the transport carriage (2), wherein the transport (1) forms an additional movement axis for the multi-axis robot, wherein the roller pins (8a, 9a) are arranged on a carrier element in groups of more than one roller pin so as to be collectively exchangeable, and wherein the roller pins (8a, 9a) and their longitudinal axes are set far enough apart to enable one or more roller pins (8a, 9a) to simultaneously positively engage in the spiral groove in the said grooved roller (22).

2. Transport device in accordance with claim 1, **characterised in that** a 6-axis robot is arranged on the transport carriage (2) and the transport device forms the seventh axis.

3. Transport device in accordance with claim 1 or 2, **characterised in that** the direction of rotation of the said grooved roller (22) can be reversed by means of its drive motor (26).

4. Transport device in accordance with claim 1 or any one of the claims following claim 1, **characterised in that** the drive motor (26) for the grooved roller is an asynchronous motor or an asynchronous servo-motor or a synchronous servo-motor that is designed so that its speed can be controlled or regulated.

5. Transport device in accordance with claim 1 or any one of the claims following claim 1, **characterised in that** arranged in the direction of the longitudinal axis of the transport track is a number of grooved rollers (22) each of which is assigned a transport carriage (2 or 30) having a motor drive (26) and each of which can be driven independently.

6. Transport device in accordance with claim 1 or any one of the claims following claim 1, **characterised in that** the transport device is between 0.5 and 50 metres or more in length.

7. Transport device in accordance with claim 1 or any one of the claims following claim 1, **characterised in that** the energy supply lines (power lines) for the drive motor (26) of the grooved roller (22) are assigned to the transport carriage (2, 30) in the form of, for example, loops so that they can be carried with it.

8. Transport device in accordance with claim 1 or any one of the claims following claim 1, **characterised in that** the grooved roller or the grooved rollers (22) is or are arranged with their longitudinal axes (16) in a horizontal plane.

9. Transport device in accordance with claim 1 or any one of claims 2 to 7, **characterised in that** the grooved roller or the grooved rollers (22) is or are arranged with their longitudinal axes (16) in a plane that deviates from the horizontal.

10. Transport device in accordance with claim 1 or any one of claims 2 to 7, **characterised in that** the grooved roller or the grooved rollers (22) is or are arranged with their longitudinal axes (16) in a vertical plane.

11. Transport device in accordance with claim 1 or any one of claims 2 to 7, **characterised in that** the transport device (1) is arranged overhead on a ceiling or a supporting structure for horizontal transport in particular.

12. Transport device in accordance with claim 1 or any one of claims 2 to 7, **characterised in that** the transport device (1) is arranged on a vertical wall or an upright supporting structure.

## Revendications

1. Dispositif de transport (1) destiné à déplacer des pièces, pendant la construction de carrosseries dans l'industrie automobile, le long d'un parcours (X - Y) comportant au moins quelques tronçons rectilignes sur une piste de convoyage rigide sur laquelle sont disposés, espacés de façon prédéfinie et permettant une rotation, des axes à galets (8a, 9a) reliés fixes à la piste de convoyage et dont les axes de rotation présentent un tracé mutuellement parallèle, avec un chariot de transport ou plusieurs chariots de transport (2, 30) et avec un ou plusieurs rouleaux à gorges (22) affectés au chariot de transport (2, 30) respectif, rouleaux qui présentent sur leur circonférence au moins une gorge hélicoïdale dans laquelle un axe à galet ou plusieurs axes à galets (8a, 9a) pénètrent par adhérence de formes tout en pouvant tourner, avec un entraînement motorisé (26) pour le rouleau à gorge (22) concerné qui est affecté au chariot de transport (2, 30) et est disposé de façon à se déplacer avec lui, sachant que l'angle du pas de la gorge reste constant sur la longueur axiale du rouleau à gorge (22), ou que l'angle du pas de la gorge varie sur la longueur de ce rouleau, sachant que l'angle du pas de la gorge définit les différentes vitesses et accélérations ou décélérations du chariot de transport (2, 30) concerné, et sachant qu'au chariot de transport (2) concerné est affecté un robot multiaxial déplaçable avec le chariot de transport (2), sachant que le dispositif de transport (1) forme un axe de déplacement supplémentaire pour le robot multiaxial, sachant que les axes à galets (8a, 9a) sont disposés chaque fois contre un corps support, en groupes de plusieurs axes à galets interchangeables ensemble, et sachant que les écarts mutuels entres les axes à galets (8a, 9a) et leurs axes longitudinaux ont été choisis de sorte qu'un axe à galet ou plusieurs axes à galets (8a, 9a) pénètrent par adhérence de forces dans la gorge hélicoïdale du rouleau à gorge (22) concerné.

2. Dispositif de transport selon la revendication 1, **caractérisé en ce que** sur le chariot de transport (2) est disposé un robot à 6 axes et que le dispositif de transport représente le septième axe de déplacement.

3. Dispositif de transport selon la revendication 1 ou 2, **caractérisé en ce que** le sens de rotation du rouleau à gorge (22) concerné peut être inversé par son moteur d'entraînement (26).

4. Dispositif de transport selon la revendication 1 ou l'une des revendications suivantes, **caractérisé en ce que** le moteur d'entraînement (26) du rouleau à gorge est un moteur asynchrone ou un servomoteur asynchrone ou un servomoteur synchrone dont la vitesse est configurée pilotable ou régulable.

5. Dispositif de transport selon la revendication 1 ou l'une des revendications suivantes, **caractérisé en ce que** dans l'axe longitudinal de la piste de transport sont disposés plusieurs rouleaux à gorge (22) auxquels est affecté respectivement un chariot de transport (2 ou 30) avec son propre entraînement motorisé (26), rouleaux qui peuvent être entraînés indépendamment les uns des autres.

6. Dispositif de transport selon la revendication 1 ou l'une des revendications suivantes, **caractérisé en ce que** la longueur du dispositif de transport est comprise entre 0,5 et 50 mètres ou plus.

7. Dispositif de transport selon la revendication 1 ou l'une des revendications suivantes, **caractérisé en ce que** les lignes d'alimentation en énergie (câbles électriques) aboutissant au moteur (26) entraînant le rouleau à gorge (22) sont affectées de manière remorquable, en boucles par exemple, au chariot de transport (2, 30).

8. Dispositif de transport selon la revendication 1 ou l'une des revendications suivantes, **caractérisé en ce que** l'axe longitudinal du rouleau à gorge ou les axes longitudinaux (16) des rouleaux à gorge (22) sont disposés sur un plan horizontal.

9. Dispositif de transport selon la revendication 1 ou l'une des revendications 2 à 7, **caractérisé en ce que** l'axe longitudinal du rouleau à gorge ou les axes longitudinaux les rouleaux à gorge (22) sont disposés sur un plan différent du plan horizontal.

10. Dispositif de transport selon la revendication 1 ou l'une des revendications 2 à 7, **caractérisé en ce que** l'axe longitudinal du rouleau à gorge ou les axes longitudinaux des rouleaux à gorge (22) sont disposés sur un plan vertical.

11. Dispositif de transport selon la revendication 1 ou l'une des revendications 2 à 7, **caractérisé en ce que** le dispositif de transport (1) est disposé à une hauteur supérieure à celle de la tête, contre un plafond ou un échafaudage, et qu'il exécute notamment des mouvements horizontaux.

12. Dispositif de transport selon la revendication 1 ou l'une des revendications 2 à 7, **caractérisé en ce que** le dispositif de transport (1) est disposé contre une paroi verticale ou contre un échafaudage en position verticale.
